# EUROPÄISCHE PATENTSCHRIFT

(11) **EP 3 265 263 B1**
(45) Veröffentlichungstag und Bekanntmachung des Hinweises auf die Patenterteilung: **12.12.2018**
(21) Anmeldenummer: 17706752.7
(22) Anmeldetag: 22.02.2017
(51) Int. Cl.: B23K 26/348

(54) **SCHWEISSVORRICHTUNG MIT EINER LASERVORWÄRMEINRICHTUNG FÜR ZUSATZDRAHT**
WELDING DEVICE WITH A LASER PREHEATING DEVICE FOR FILLER WIRE
DISPOSITIF DE SOUDAGE AVEC UN DISPOSITIF LASER DE PRÉCHAUFFAGE POUR FIL D'APPORT

(30) Priorität: 23.02.2016 EP 16156979
(43) Veröffentlichungstag der Anmeldung: 10.01.2018
(73) Patentinhaber: Fronius International GmbH, 4643 Pettenbach (AT)
(72) Erfinder: LATTNER, Peter, 4633 Kematen am Innbach (AT); STAUFER, Herbert, 4501 Neuhofen (AT); KRELL, Christian, 1080 Wien (AT)
(74) Vertreter: Sonn & Partner Patentanwälte
(86) Internationale Anmeldenummer: PCT/EP2017/054020
(87) Internationale Veröffentlichungsnummer: WO 2017/144515

(56) Entgegenhaltungen:
- EP-A1- 2 777 858
- WO-A2-2014/006488
- US-A1- 2014 042 131

## Beschreibung

Die Erfindung betrifft eine Schweißvorrichtung mit einem Schweißbrenner, einer Fördereinrichtung zur Förderung eines abschmelzenden Zusatzwerkstoffs mit einer Fördergeschwindigkeit zu einer Schweißstelle, an welcher der Zusatzwerkstoff mit Hilfe eines Lichtbogens geschmolzen wird, und mit einer Vorwärmeinrichtung zum Erwärmen des Zusatzwerkstoffs vor der Schweißstelle mittels eines in einer Laservorrichtung erzeugten Laserstrahls mit einer Laserleistung.

Es sind Schweißvorrichtungen der gegenständlichen Art bekannt, bei welchen der Zusatzwerkstoff bzw. das Verbrauchsmaterial mit Hilfe eines Laserstrahls erwärmt wird, um die Abschmelzleistung des Zusatzwerkstoffs zu erhöhen und die Produktivität zu steigern. Beispielsweise beschreibt die WO 2014/006488 A2 ein derartiges Verfahren bzw. System, bei welchem der Laserstrahl ungeschützt an die Schweißstelle gerichtet wird. Nachteilig dabei ist, dass bei einem solchen System die entsprechenden Richtlinien betreffend die Lasersicherheit berücksichtigt werden müssen und das System für manuelle Schweißbrenner daher ungeeignet ist.

Andere Vorrichtungen für das Erhitzen des Zusatzwerkstoffs beaufschlagen diesen mit Wechselstrom, wodurch die Verlustleistung zu einer Erwärmung des Zusatzwerkstoffs führt. Beispielsweise beschreibt die EP 2 777 858 A1, welche als nächstliegender Stand der Technik angesehen wird, eine derartige Heizvorrichtung zum Erwärmen eines Zusatzwerkstoffs beim Lichtbogenschweißen. Nachteilig dabei ist, dass der zum Erwärmen verwendete Wechselstrom ein magnetisches Feld erzeugt, welches den Schweiß-Lichtbogen abstößt bzw. anzieht und somit den Schweißpunkt beeinflusst.

Die Aufgabe der vorliegenden Erfindung besteht darin, eine oben genannte Schweißvorrichtung zu schaffen, welche eine Erwärmung des Zusatzwerkstoffs mit Hilfe des Laserstrahls ermöglicht, ohne dass bestimmte Sicherheitsmaßnahmen aufgrund des Laserlichts ergriffen werden müssen. Die Erwärmung des Zusatzwerkstoffs soll möglichst effizient und wirkungsvoll sein. Nachteile bekannter Schweißvorrichtung sollen vermieden oder zumindest reduziert werden.

Gelöst wird die erfindungsgemäße Aufgabe dadurch, dass die Vorwärmeinrichtung einen Förderkanal für den Zusatzwerkstoff aufweist, und zumindest eine Umlenkeinrichtung zum Umlenken des Laserstrahls auf den Zusatzwerkstoff derart an der Vorwärmeinrichtung befestigt ist, dass der Laserstrahl innerhalb des Förderkanals der Vorwärmeinrichtung auf den Zusatzwerkstoff auftrifft. Durch die verwendete zumindest eine Umlenkeinrichtung ist es möglich, die Laservorrichtung an einem dafür geeigneten Platz der Schweißvorrichtung anzuordnen und das Laserlicht über die Umlenkeinrichtung an die gewünschte Stelle auf dem Zusatzwerkstoff zu richten. Dadurch, dass der Laserstrahl innerhalb des Förderkanals der Vorwärmeinrichtung, in dem der Zusatzwerkstoff befördert wird, auf diesen auftrifft, befindet sich der Laserstrahl in einem geschlossenen System, weshalb keine Sicherheitsvorkehrungen zu Vermeidung, dass Laserlicht in die Augen des Benutzers gelangt, getroffen werden müssen. Die erfindungsgemäßen Merkmale können relativ einfach und kostengünstig auch an vorhandenen Schweißvorrichtungen angeordnet werden, sodass eine breite Anwendung möglich ist. Durch die Erwärmung des Zusatzwerkstoffs kommt es zu einer Erhöhung der Abschmelzleistung des Zusatzwerkstoffs, wodurch einerseits eine höhere Spaltüberbrückbarkeit oder eine höhere Schweißgeschwindigkeit erzielbar ist.

Die zumindest eine Umlenkeinrichtung kann in einfachster Weise durch einen Spiegel gebildet sein. Dabei kommen sowohl plane Spiegel als auch gewölbte Spiegel in Frage, je nachdem ob ein Fokussieren oder Auffächern des Laserstrahls gewünscht wird.

Ebenso kann die zumindest eine Umlenkeinrichtung durch ein Prisma gebildet sein. Auch beim Prisma kann die Reflexionsfläche an welcher der Laserstrahl umgelenkt wird, sowohl eben als auch gekrümmt ausgebildet sein, je nachdem ob eine Fokussierung oder eine Auffächerung des Laserstrahls gewünscht wird.

Wenn zumindest eine Linse vor oder nach der zumindest einen Umlenkeinrichtung vorgesehen ist, kann der Laserstrahl gebündelt oder kollimiert werden. Eine derartige Linse kann anstelle eines gekrümmt ausgebildeten Spiegels oder Prismas oder auch zusätzlich vorgesehen werden, um den Durchmesser des auf den Zusatzwerkstoff zu dessen Erwärmung auftreffenden Lichtpunkts einstellen zu können. Je nach Anordnung der Linse kann der Fokus des Laserstrahls eingestellt und optimiert werden. Üblicherweise werden derartige Linsen aus Glas oder einem Glasderivat hergestellt.

Die zumindest eine Umlenkeinrichtung ist vorzugsweise zum Umlenken des Laserstrahles auf den Zusatzwerkstoff in einem Abstand zwischen 0,5 und 8 cm, insbesondere 1 und 3 cm, von der Schweißstelle ausgebildet. Diese Werte haben sich als besonders bevorzugt herausgestellt, da der Erwärmungspunkt nicht zu nahe an der Schweißstelle angeordnet werden soll, um eine Ausbreitung der Wärme innerhalb des Zusatzwerkstoffs zu ermöglichen aber auch nicht zu weit von der Schweißstelle entfernt sein soll um ein Auskühlen des Zusatzwerkstoffs während des Transports zur Schweißstelle zu verhindern. Dabei ergibt sich die untere Grenze des bevorzugten Bereichs hauptsächlich aus konstruktiven Bedingungen. Beim WIG-Schweißen liegt der bevorzugte Abstand beispielsweise zwischen 1 und 3 cm, beim MIG/MAG-Schweißen zwischen 3 und 5 cm.

Zwischen der Laservorrichtung und der zumindest einen Umlenkeinrichtung ist vorzugsweise ein Lichtwellenleiter angeordnet. Über einen solchen Lichtwellenleiter kann das Laserlicht auch über weitere Strecken von der Laservorrichtung zur Umlenkeinrichtung ohne erhebliche Leistungsverluste transportiert werden, wodurch die Baugröße im Bereich der Schweißstelle nicht wesentlich erhöht werden muss. Beispielsweise kann die Laservorrichtung im Bereich der Stromquelle der Schweißvorrichtung angeordnet sein und das Laserlicht über den Lichtwellenleiter zum Schweißbrenner transportiert werden. Die Umlenkeinrichtung kann auch durch den Lichtwellenleiter mit ausgebildet werden. Dies kann konstruktive Vereinfachungen bewirken und zu einer einfach herstellbaren Umlenkeinrichtung führen.

Wenn die zumindest eine Umlenkeinrichtung bewegbar angeordnet ist, können verschiedene Verbesserungen und Effekte erzielt werden. Beispielsweise kann der Auftreffpunkt des Laserstrahls an der Oberfläche des Zusatzwerkstoffs verändert werden um eine gleichmäßige Erwärmung des Zusatzwerkstoffs zu erzielen. Beispielsweise kann das Laserlicht in einer oszillierenden Bewegung um die Mittellinie des Zusatzwerkstoffs bewegt werden. Die Bewegung kann durch entsprechende Einrichtungen, beispielsweise Schrittmotoren, bewerkstelligt werden.

Die zumindest eine Umlenkeinrichtung kann zur Umlenkung des Laserstrahls in einem Winkel zwischen 45° und 90° zur Förderrichtung des Zusatzwerkstoffs ausgebildet sein. Wird das Laserlicht in einem schrägen Winkel zur Förderrichtung des Zusatzwerkstoffs auf diesen gerichtet, resultiert ein größerer Auftreffpunkt bzw. eine größere Auftrefffläche des Laserlichts am Zusatzwerkstoff und somit eine größere Erwärmungsfläche im Gegensatz zu einem rechten Winkel. Dies kann zu einer gleichmäßigeren Erwärmung des Zusatzwerkstoffs führen. Als vorteilhaft hat sich auch die Wahl eines geringfügig vom rechten Winkel abweichenden Winkel herausgestellt, da dadurch eine Reflexion des Laserlichts von der Oberfläche des Zusatzwerkstoffs zurück in die Umlenkeinrichtung verhindert werden kann. Beispielsweise kann das Laserlicht in einen Winkel von 78° bis 89° zur Förderrichtung des Zusatzwerkstoffs umgelenkt werden.

Wenn die Oberfläche des Förderkanals für den Zusatzwerkstoff poliert ist, kann erreicht werden, dass nahezu kein Laserlicht durch Absorption an der Oberfläche des Förderkanals verloren geht, sondern durch mehrmalige Reflexion von der Oberfläche des Förderkanals schlussendlich zum größten Teil auf den Zusatzwerkstoff auftrifft und zur Erwärmung desselben beiträgt. Je nach verwendetem Material für die Fördereinrichtung, in welcher der Förderkanal angeordnet ist, wird das Polieren der Oberfläche des Förderkanals mit verschiedenen Methoden durchzuführen zu sein. Auch bestimmte Beschichtungen der Oberfläche des Förderkanals zur Erzielung einer möglichst hohen Reflexion des Laserlichts sind möglich.

Die Vorwärmeinrichtung kann im Schweißbrenner der Schweißvorrichtung integriert sein. Dadurch wird die Baugröße des Schweißbrenners nur unwesentlich beeinflusst und die Handhabung des Schweißbrenners kann in gewohnter Weise vom Schweißer vorgenommen werden.

Zur Kühlung der zumindest einen Umlenkeinrichtung und bzw. oder Vorwärmeinrichtung kann eine Kühlvorrichtung vorgesehen sein. Die Kühlung der Umlenkeinrichtung und der Vorwärmeinrichtung erfolgt vorzugsweise durch entsprechend geeignete Kühlfluide insbesondere Kühlflüssigkeiten. Dabei können entsprechende Kühlkanäle in der Umlenkeinrichtung und bzw. oder Vorwärmeinrichtung vorgesehen sein, durch welche das Kühlfluid transportiert wird.

Gemäß einem weiteren Merkmal der Erfindung ist eine Steuereinrichtung zur Steuerung der Laserleistung in Abhängigkeit der Fördergeschwindigkeit des Zusatzwerkstoffs und bzw. oder zur Steuerung der Fördergeschwindigkeit des Zusatzwerkstoffs in Abhängigkeit der Laserleistung vorgesehen. Durch eine derartige Steuereinrichtung wird gewährleistet, dass die für die gewünschte Erwärmung des Zusatzwerkstoffs notwendige Laserleistung in den Zusatzwerkstoff eingebracht wird, unabhängig von der Fördergeschwindigkeit des Zusatzwerkstoffs. Die Steuereinrichtung kann natürlich auch durch die ohnehin vorhandene Steuereinrichtung der Schweißvorrichtung gebildet sein.

Die Laserleistung beträgt idealerweise zwischen 10 W und 2 kW. Derartige Laserleistungen haben sich für eine effiziente Erwärmung des Zusatzwerkstoffs beim Schweißverfahren als geeignet bzw. ausreichend herausgestellt. Die Laservorrichtung kann zur Bildung eines gepulsten oder kontinuierlichen Laserstrahls ausgebildet sein.

Wenn ein Temperatursensor vorgesehen ist, kann einerseits eine Regelung der Laserleistung zur Erzielung einer gewünschten Temperatur und andererseits auch eine Warnung vor unzulässig hohen Temperaturen im Bereich der Umlenkeinrichtung oder des Förderkanals der Fördereinrichtung erzielt werden. Der Temperatursensor kann in der Vorwärmeinrichtung in der Nähe des Förderkanals oder am Ausgang des Förderkanals angeordnet werden.

Die Laservorrichtung ist vorzugsweise zur Erzeugung eines Laserstrahls im Infrarot-Wellenlängenbereich ausgebildet. Infrarotlaser sind für die Erwärmung des Zusatzwerkstoffs besonders geeignet und auch in verschiedenen Leistungsgruppen kostengünstig erhältlich. Je nach Material des Zusatzwerkstoffs können jedoch auch andere Wellenlängenbereiche des Lasers von Vorteil sein.

Die Erfindung wird anhand der beigefügten Zeichnungen näher erläutert. Darin zeigen:
- Fig. 1: eine schematische Ansicht einer in einem Schweißbrenner integrierten Vorwärmeinrichtung zum Erwärmen des Zusatzwerkstoffs;
- Fig. 2: ein Blockschaltbild einer Steuereinrichtung zur Steuerung der Laserleistung in Abhängigkeit der Fördergeschwindigkeit des Zusatzwerkstoffs; und
- Fig. 3: eine Variante einer Vorwärmeinrichtung mit der erfindungsgemäß ausgebildeten Umlenkeinrichtung für den Laserstrahl.

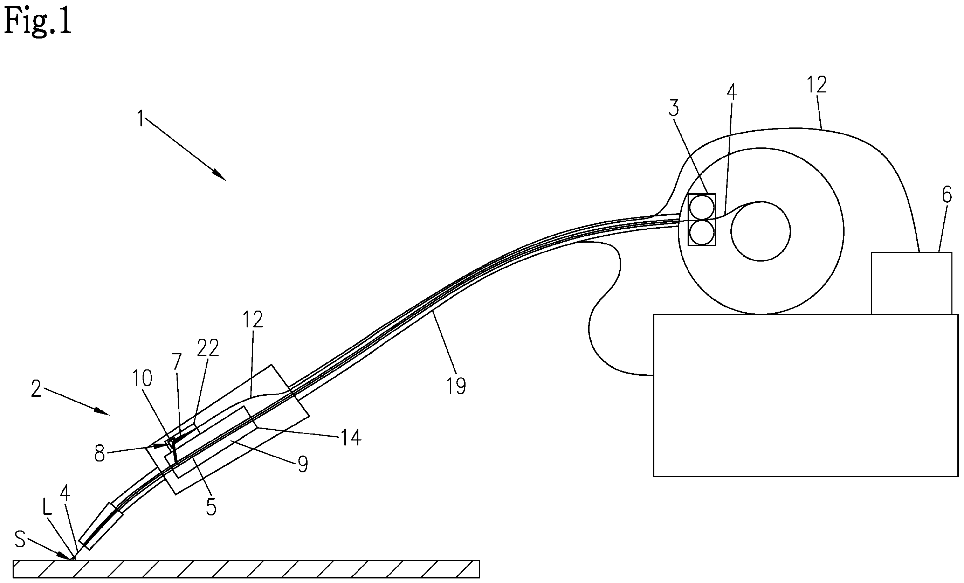

Fig. 1 zeigt eine schematische Ansicht einer in einem Schweißbrenner 2 einer Schweißvorrichtung 1 integrierten Vorwärmeinrichtung 9 zum Erwärmen des Zusatzwerkstoffs 4, insbesondere Schweißdrahts. Der Zusatzwerkstoff 4 wird über eine Fördereinrichtung 3 mit einer Fördergeschwindigkeit v durch ein Schlauchpaket 19 zur Schweißstelle S transportiert. Im Schlauchpaket 19 befinden sich auch die Leitungen für weitere für den Schweißprozess erforderliche Medien, wie Strom, Gas, Kühlfluid, usw. Eine Laservorrichtung 6 zur Erzeugung eines Laserstrahls 7 mit einer Laserleistung P ist an einer geeigneten Stelle angeordnet. Vorzugsweise über einen Lichtwellenleiter 12 wird das Laserlicht 7 von der Laservorrichtung 6 zu einer Umlenkeinrichtung 8 der Vorwärmeinrichtung 9 transportiert, wo der Laserstrahl 7 umgelenkt und innerhalb eines Förderkanals 5 der Vorwärmeinrichtung 9 auf den Zusatzwerkstoff 4 gerichtet wird. Im dargestellten Ausführungsbeispiel ist die Umlenkeinrichtung 8 durch ein Prisma 10 gebildet. Es wird also der Laserstrahl 7 im Bereich der Vorwärmeinrichtung 9 im Wesentlichen parallel zum Zusatzwerkstoff 4 geführt und durch das Prisma 10 um einen Winkel (180°-α) umgelenkt. Die Komponenten der Umlenkeinrichtung 8 sind in einem Gehäuse 22 angeordnet, an welchem beispielsweise der Lichtwellenleiter 12 befestigt ist. Bei einer alternativen kompakten Ausführungsform kann der Lichtwellenleiter 12 auch an der Vorwärmeinrichtung 9 befestigt sein und die Umlenkeinrichtung 8 durch den Lichtwellenleiter 12 gebildet sein, in welcher der Laserstrahl 7 mehrmals umgelenkt wird. Dadurch dass der Laserstrahl 7 nur innerhalb der Vorwärmeinrichtung 9 und allenfalls durch den Lichtwellenleiter 12 in einem geschlossenen System transportiert wird, sind keine Sicherheitsmaßnahmen zur Erfüllung der Laserrichtlinien erforderlich. Durch den auftreffenden Laserstrahl 7 am Zusatzwerkstoff 4 wird dieser entsprechend erwärmt, wodurch die Abschmelzleistung des Zusatzwerkstoffs 4 an der Schweißstelle S erhöht werden kann. Dabei haben sich Temperaturen im Bereich des Auftreffpunkts des Laserstrahls 7 im Bereich zwischen 700 K und 1000 K, und Temperaturen an der Rückseite des Auftreffpunkts des Laserstrahls 7 im Bereich zwischen 500 K und 900 K, abhängig vom Material des Zusatzwerkstoffs 4 als besonders geeignet herausgestellt. Dadurch resultieren Temperaturen des Zusatzwerkstoffs 4 im Bereich der Schweißstelle S von 500 K bis 1000 K. Abstände Δx zwischen dem Auftreffpunkt des Laserstrahls 7 auf den Zusatzwerkstoff 4 und der Schweißstelle S im Bereich zwischen 0.5 und 8 cm, insbesondere 1 und 3 cm, haben sich als optimal herausgestellt. Der optimale Abstand Δx hängt dabei vom Schweißverfahren, beispielsweise MIG/MAG- oder WIG-Verfahren, ab.

Die Laservorrichtung 6 kann zur Bildung eines gepulsten oder kontinuierlichen Laserstrahls 7, insbesondere im Infrarotwellenlängenbereich, ausgebildet sein.

Um eine möglichst gute Reflexion des Laserlichts an der Oberfläche des Förderkanals 5 der Vorwärmeinrichtung 9 zu erzielen, kann dieser poliert oder mit einer entsprechenden Beschichtung versehen sein. Die Vorwärmeinrichtung 9 kann ein Gehäuse 14, insbesondere aus Metall oder Keramik, aufweisen.

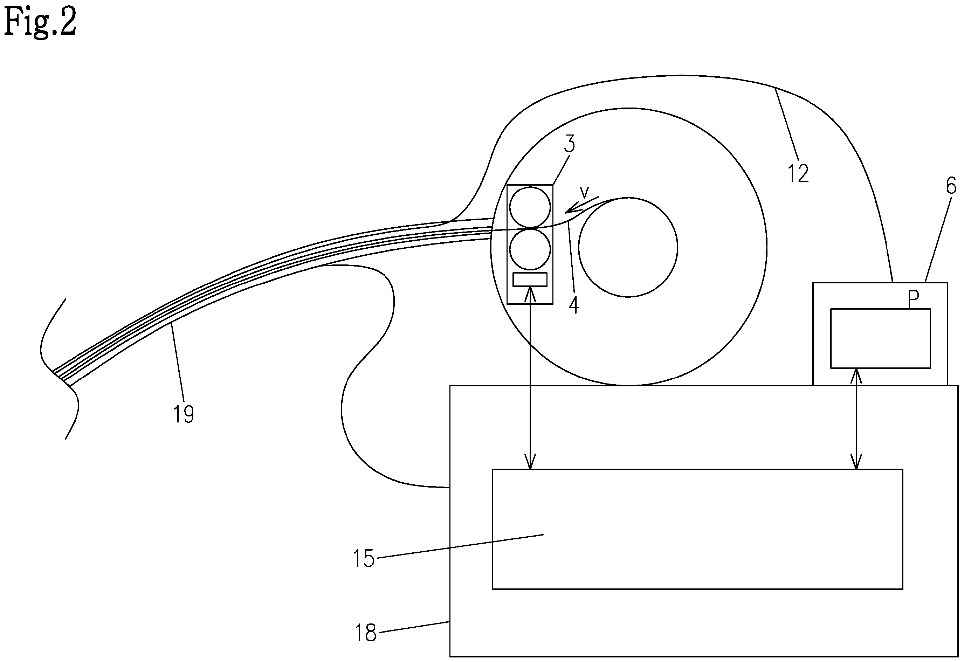

Fig. 2 zeigt ein Blockschaltbild einer Steuereinrichtung 15 zur Steuerung der Laserleistung P in Abhängigkeit der Fördergeschwindigkeit v des Zusatzwerkstoffs 4 bzw. umgekehrt. Die Steuereinrichtung 15 kann in der Stromquelle 18 der Schweißvorrichtung 1 angeordnet sein und ist durch einen entsprechenden Mikroprozessor gebildet, der auch durch den ohnehin vorhandenen Mikroprozessor der Schweißvorrichtung 1 gebildet sein kann. Durch Verarbeitung der Laserleistung P einerseits und der Fördergeschwindigkeit v des Zusatzwerkstoffs 4 andererseits kann eine entsprechende Regelung jeweils eines Parameters erfolgen.

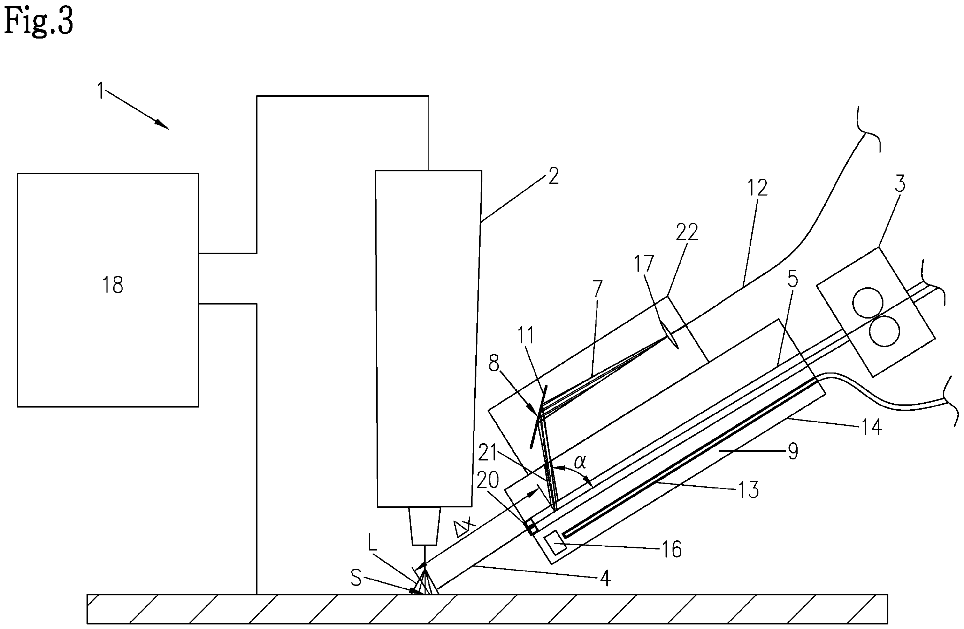

In Fig. 3 ist eine alternative Ausführungsvariante einer Vorwärmeinrichtung 9 mit der erfindungsgemäß ausgebildeten Umlenkeinrichtung 8 für den Laserstrahl 7 dargestellt. Die Vorwärmeinrichtung 9 ist nicht im Schweißbrenner 2 der Schweißvorrichtung 1 mit der Stromquelle 18 integriert, sondern stellt eine eigenständige Baueinheit dar. Diese Variante wird bei Schweißvorrichtungen 1, bei welchen der Zusatzwerkstoff 4 bzw. Schweißdraht nicht durch den Schweißbrenner an die Schweißstelle S befördert wird, beispielsweise beim WIG-Schweißen, angewendet werden. Die Vorwärmeinrichtung 9 ist beispielsweise zylinderförmig ausgebildet und der Förderkanal 5 axial im Zentrum des Zylinders angeordnet. Für den Eintritt des Laserstrahls 7 ist zumindest eine radial angeordnete Öffnung, beispielsweise Bohrung 21, vorgesehen, welche die Verbindung zwischen der Umlenkeinrichtung 8 und der Vorwärmeinrichtung 9 darstellt. Die Öffnung kann auch derart ausgebildet sein, dass mehrere Auftreffflächen am Zusatzwerkstoff 4 erzielt werden können, was durch mehrere Bohrungen 21 realisiert werden kann. Dabei wird der Laserstrahl 7 beispielsweise durch ein geeignetes Prisma aufgespaltet und jeweils ein Teillaserstrahl von der außen an der Vorwärmeinrichtung 9 angeordneten Umlenkeinrichtung 8 durch je eine Bohrungen 21 auf die Oberfläche des Zusatzwerkstoffs 4 gerichtet (nicht dargestellt).

Die zumindest eine Umlenkeinrichtung 8 kann auch durch einen Spiegel 11 gebildet sein. Vor und nach der Umlenkeinrichtung 8 kann eine Linse 17 zum Bündeln oder Kollimieren des Laserstrahls 7 vorgesehen sein. Von Vorteil ist es, wenn der Laserstrahl 7 nicht im rechten Winkel auf dem Zusatzwerkstoff 4 gerichtet wird, sondern davon geringfügig um etwa 1° bis 3° abweichend, sodass eine Reflexion des Laserlichts von der Oberfläche des Zusatzwerkstoffs 4 zurück in die Umlenkeinrichtung 8 unterbunden werden kann. Zur Erzielung eines größeren Auftreffpunkts bzw. einer Auftrefffläche an der Oberfläche des Zusatzwerkstoffs 4 kann der Laserstrahl 7 auch in einem spitzeren Winkel α, beispielsweise von 45° bis 60°, auf die Oberfläche des Zusatzwerkstoffs 4 gerichtete werden. Die Bohrung 21 zur Bildung der Öffnung ist entsprechend fluchtend mit dem Laserstrahl 7 in Richtung der gewünschten Auftrefffläche an der Oberfläche des Zusatzwerkstoffs 4 angeordnet.

Durch beweglich angeordnete Umlenkeinrichtungen 8 kann eine Veränderung des Auftreffpunkts des Laserstrahls 7 auf den Zusatzwerkstoff 4 und somit eine gleichmäßigere Erwärmung des Zusatzwerkstoffs 4 erzielt werden. Dabei wird der Durchmesser der Bohrung 21 zur Führung des Laserstrahls 7 entsprechend größer ausgeführt.

Über eine entsprechende Kühlvorrichtung 13 kann die Umlenkeinrichtung 8 und bzw. oder die Vorwärmeinrichtung 9 durch entsprechende Kühlfluide gekühlt werden. Zur Regelung kann an entsprechenden Stellen zumindest ein Temperatursensor 16 angeordnet bzw. integriert sein. Dazu sind in der Vorwärmeinrichtung 9 und bzw. oder der Umlenkeinrichtung 8 entsprechende Kühlkanäle vorgesehen.

Zur Verhinderung des Austritts von Laserlicht aus der Vorwärmeinrichtung 9 kann am Ende des Förderkanals 5 ein entsprechend gestaltetes Dichtungselement 20 angeordnet sein.

Die Vorwärmeinrichtung 8 kann beispielsweise auch einen Kanal für ein Schutzgas aufweisen und bzw. oder aus einem elektrisch leitenden Material gefertigt sein, sodass der Schweißstrom über die Vorwärmeinrichtung 9 an ein Kontaktrohr des Schweißbrenners 2 geführt werden kann. Hierfür kann die Vorwärmeinrichtung 9 auch eine Aufnahme, beispielsweise ein Gewinde, für das Kontaktrohr oder einen Rohrbogen des Schweißbrenners 2 aufweisen (nicht dargestellt).

Der Schweißbrenner 2 kann auch eine Gasdüse beinhalten, in welcher die Vorwärmeinrichtung 9 und die Umlenkeinrichtung 8 integriert sein kann. Dadurch kann der Abstand Δx zwischen dem Auftreffpunkt oder der Auftrefffläche des Laserstrahls 7 auf dem Zusatzwerkstoff 4 und der Schweißstelle S verkürzt werden.

## Patentansprüche

1. Schweißvorrichtung (1) mit einem Schweißbrenner (2), einer Fördereinrichtung (3) zur Förderung eines abschmelzenden Zusatzwerkstoffs (4) mit einer Fördergeschwindigkeit (v) zu einer Schweißstelle (S), an welcher der Zusatzwerkstoff (4) mit Hilfe eines Lichtbogens (L) geschmolzen wird, und mit einer einen Förderkanal (5) für den Zusatzwerkstoff aufweisenden Vorwärmeinrichtung (9) zum Erwärmen des Zusatzwerkstoffs (4) vor der Schweißstelle (S), **dadurch gekennzeichnet, dass** die Vorwärmeinrichtung (9) zum Erwärmen des Zusatzwerkstoffs (4) vor der Schweißstelle (S) mittels eines in einer Laservorrichtung (6) erzeugten Laserstrahls (7) mit einer Laserstrahlung (P) geeignet ist, und zumindest eine Umlenkeinrichtung (8) zum Umlenken des Laserstrahls (7) auf den Zusatzwerkstoff (4) derart an der Vorwärmeinrichtung (9) befestigt ist, dass der Laserstrahl (7) innerhalb des Förderkanals (5) der Vorwärmeinrichtung (9) auf den Zusatzwerkstoff (4) auftrifft.

2. Schweißvorrichtung (1) nach Anspruch 1, **dadurch gekennzeichnet, dass** die zumindest eine Umlenkeinrichtung (8) durch einen Spiegel (11) gebildet ist.

3. Schweißvorrichtung (1) nach Anspruch 1 oder 2, **dadurch gekennzeichnet, dass** die zumindest eine Umlenkeinrichtung (8) durch ein Prisma (10) gebildet ist.

4. Schweißvorrichtung (1) nach einem der Ansprüche 1 bis 3, **dadurch gekennzeichnet, dass** zumindest eine Linse (17) zum Bündeln oder Kollimieren des Laserstrahls (7) vorgesehen ist.

5. Schweißvorrichtung (1) nach einem der Ansprüche 1 bis 4, **dadurch gekennzeichnet, dass** die zumindest eine Umlenkeinrichtung (8) zum Umlenken des Laserstrahles (7) auf den Zusatzwerkstoff (4) in einem Abstand (Δx) zwischen 0,5 und 8 cm, insbesondere 1 und 3 cm, von der Schweißstelle (S) ausgebildet ist.

6. Schweißvorrichtung (1) nach einem der Ansprüche 1 bis 5, **dadurch gekennzeichnet, dass** zwischen der Laservorrichtung (6) und der zumindest einen Umlenkeinrichtung (8) ein Lichtwellenleiter (12) angeordnet ist.

7. Schweißvorrichtung (1) nach einem der Ansprüche 1 bis 6, **dadurch gekennzeichnet, dass** die zumindest eine Umlenkeinrichtung (8) bewegbar angeordnet ist.

8. Schweißvorrichtung (1) nach einem der Ansprüche 1 bis 7, **dadurch gekennzeichnet, dass** die zumindest eine Umlenkeinrichtung (8) zur Umlenkung des Laserstrahls (7) in einem Winkel (α) zwischen 45° und 90° zur Förderrichtung des Zusatzwerkstoffs (4) ausgebildet ist.

9. Schweißvorrichtung (1) nach einem der Ansprüche 1 bis 8, **dadurch gekennzeichnet, dass** die Oberfläche des Förderkanals (5) für den Zusatzwerkstoff (4) poliert ist.

10. Schweißvorrichtung (1) nach einem der Ansprüche 1 bis 9, **dadurch gekennzeichnet, dass** die Vorwärmeinrichtung (9) im Schweißbrenner (2) integriert ist.

11. Schweißvorrichtung (1) nach einem der Ansprüche 1 bis 10, **dadurch gekennzeichnet, dass** eine Kühlvorrichtung (13) zur Kühlung der zumindest einen Umlenkeinrichtung (8) und bzw. oder Vorwärmeinrichtung (9) vorgesehen ist.

12. Schweißvorrichtung (1) nach einem der Ansprüche 1 bis 11, **dadurch gekennzeichnet, dass** eine Steuereinrichtung (15) zur Steuerung der Laserleistung (P) in Abhängigkeit der Fördergeschwindigkeit (v) des Zusatzwerkstoffs (4) und bzw. oder zur Steuerung der Fördergeschwindigkeit (v) des Zusatzwerkstoffs (4) in Abhängigkeit der Laserleistung (P) vorgesehen ist.

13. Schweißvorrichtung (1) nach einem der Ansprüche 1 bis 12, **dadurch gekennzeichnet, dass** Laserleistung (P) zwischen 10 W und 2 kW beträgt.

14. Schweißvorrichtung (1) nach einem der Ansprüche 1 bis 13, **dadurch gekennzeichnet, dass** ein Temperatursensor (16) vorgesehen ist.

15. Schweißvorrichtung (1) nach einem der Ansprüche 1 bis 14, **dadurch gekennzeichnet, dass** die Laservorrichtung (6) zur Erzeugung eines Laserstrahls (7) im Infrarot-Wellenlängenbereich ausgebildet ist.

## Claims

1. Welding apparatus (1) comprising a welding torch (2), a conveying means (3) for conveying a melting filler material (4) at a conveying rate (v) to a welding point (S) at which the filler material (4) is melted by means of an electric arc (L), and comprising a preheating means (9), which comprises a conveying channel (5) for the filler material, for heating the filler material (4) upstream of the welding point (S), **characterised in that** the preheating means (9) is suitable for heating the filler material (4) upstream of the welding point (S) by means of a laser beam (7) which is generated in a laser apparatus (6) and has a laser power (P), and at least one deflection means (8) for deflecting the laser beam (7) onto the filler material (4) is attached to the preheating means (9) such that the laser beam (7) impinges on the filler material (4) inside the conveying channel (5) of the preheating means (9).

2. Welding apparatus (1) according to claim 1, **characterised in that** the at least one deflection means (8) is formed by a mirror (11).

3. Welding apparatus (1) according to either claim 1 or claim 2, **characterised in that** the at least one deflection means (8) is formed by a prism (10).

4. Welding apparatus (1) according to any of claims 1 to 3, **characterised in that** at least one lens (17) is provided for bundling or collimating the laser beam (7).

5. Welding apparatus (1) according to any of claims 1 to 4, **characterised in that** the at least one deflection means (8) is designed to deflect the laser beam (7) onto the filler material (4) at a distance (Δx) of between 0.5 and 8 cm, in particular 1 and 3 cm, from the welding point (S).

6. Welding apparatus (1) according to any of claims 1 to 5, **characterised in that** an optical waveguide (12) is arranged between the laser apparatus (6) and the at least one deflection means (8).

7. Welding apparatus (1) according to any of claims 1 to 6, **characterised in that** the at least one deflection means (8) is arranged so as to be movable.

8. Welding apparatus (1) according to any of claims 1 to 7, **characterised in that** the at least one deflection means (8) is designed to deflect the laser beam (7) at an angle (α) of between 45° and 90° with respect to the conveying direction of the filler material (4).

9. Welding apparatus (1) according to any of claims 1 to 8, **characterised in that** the surface of the conveying channel (5) for the filler material (4) is polished.

10. Welding apparatus (1) according to any of claims 1 to 9, **characterised in that** the preheating means (9) is integrated in the welding torch (2).

11. Welding apparatus (1) according to any of claims 1 to 10, **characterised in that** a cooling apparatus (13) is provided for cooling the at least one deflection means (8) and/or preheating means (9).

12. Welding apparatus (1) according to any of claims 1 to 11, **characterised in that** a control device (15) is provided for controlling the laser power (P) on the basis of the conveying rate (v) of the filler material (4) and/or for controlling the conveying rate (v) of the filler material (4) on the basis of the laser power (P).

13. Welding apparatus (1) according to any of claims 1 to 12, **characterised in that** the laser power (P) is between 10 W and 2 kW.

14. Welding apparatus (1) according to any of claims 1 to 13, **characterised in that** a temperature sensor (16) is provided.

15. Welding apparatus (1) according to any of claims 1 to 14, **characterised in that** the laser apparatus (6) is designed to generate a laser beam (7) in the infrared wavelength range.

## Revendications

1. Dispositif de soudure (1) avec un chalumeau de soudure (2), un dispositif de convoyage (3) pour le convoyage d'un additif fusible (4) avec une vitesse de convoyage (v) vers un point de soudure (S) au niveau duquel l'additif (4) est fondu à l'aide d'un arc électrique (L) et avec un dispositif de pré-chauffage (9) comprenant un canal de convoyage (5) pour l'additif, pour le chauffage de l'additif (4) avant le point de soudure (S),
**caractérisé en ce que** le dispositif de pré-chauffage (9) est conçu pour le pré-chauffage de l'additif (4) avant le point de soudure (S) au moyen d'un rayon laser (7) généré dans un dispositif laser (6) avec un puissance du laser (P) et au moins un dispositif de déviation (8) est fixé au dispositif de pré-chauffage (9), pour la déviation du rayon laser (7) vers l'additif (4) de façon à ce que le rayon laser (7) arrive sur l'additif (4) à l'intérieur du canal de convoyage (5) du dispositif de pré-chauffage (9).

2. Dispositif de soudure (1) selon la revendication 1, **caractérisé en ce que** l'au moins un dispositif de déviation (8) est constitué d'un miroir (11).

3. Dispositif de soudure (1) selon la revendication 1 ou 2, **caractérisé en ce que** l'au moins un dispositif de déviation (8) est constitué d'un prisme (10).

4. Dispositif de soudure (1) selon l'une des revendications 1 à 3, **caractérisé en ce qu'**au moins une lentille (17) est prévue pour la focalisation ou la collimation du rayon laser (7).

5. Dispositif de soudure (1) selon l'une des revendications 1 à 4, **caractérisé en ce que** l'au moins un dispositif de déviation (8) est conçu pour la déviation du rayon laser (7) vers l'additif (4) à une distance (Δx) entre 0,5 et 8 cm, plus particulièrement 1 et 3 cm, du point de soudure (S).

6. Dispositif de soudure (1) selon l'une des revendications 1 à 5, **caractérisé en ce que**, entre le dispositif laser (6) et l'au moins un dispositif de déviation (8), est disposée une fibre optique (12).

7. Dispositif de soudure (1) selon l'une des revendications 1 à 6, **caractérisé en ce que** l'au moins un dispositif de déviation (8) est disposé de manière mobile.

8. Dispositif de soudure (1) selon l'une des revendications 1 à 7, **caractérisé en ce que** l'au moins un dispositif de déviation (8) est conçu pour la déviation du rayon laser (7) avec un angle (α) entre 45° et 90° par rapport à la direction de convoyage de l'additif (4).

9. Dispositif de soudure (1) selon l'une des revendications 1 à 8, **caractérisé en ce que** la surface du canal de convoyage (5) pour l'additif (4) est polie.

10. Dispositif de soudure (1) selon l'une des revendications 1 à 9, **caractérisé en ce que** le dispositif de pré-chauffage (9) est intégré dans le chalumeau de soudure (2).

11. Dispositif de soudure (1) selon l'une des revendications 1 à 10, **caractérisé en ce qu'**un dispositif de refroidissement (13) est prévu pour le refroidissement de l'au moins un dispositif de déviation (8) ou dispositif de pré-chauffage (9).

12. Dispositif de soudure (1) selon l'une des revendications 1 à 11, **caractérisé en ce qu'**un dispositif de commande (15) est prévu pour le contrôle de la puissance du laser (P) en fonction de la vitesse de convoyage (v) de l'additif (4) ou pour le contrôle de la vitesse de convoyage (v) de l'additif (4) en fonction de la puissance du laser (P).

13. Dispositif de soudure (1) selon l'une des revendications 1 à 12, **caractérisé en ce que** la puissance du laser (P) est entre 10 W et 2 kW.

14. Dispositif de soudure (1) selon l'une des revendications 1 à 13, **caractérisé en ce qu'**un capteur de température (16) est prévu.

15. Dispositif de soudure (1) selon l'une des revendications 1 à 14, **caractérisé en ce que** le dispositif laser (6) est conçu pour la production d'un rayon laser (7) dans la plage des longueurs d'ondes infrarouges.
